# EUROPÄISCHE PATENTANMELDUNG

(11) **EP 4 292 799 A1**
(43) Veröffentlichungstag der Anmeldung: **20.12.2023**
(21) Anmeldenummer: 23173116.7
(22) Anmeldetag: 12.05.2023
(51) Int. Cl.: B29D 30/06

(54) **HEIZPRESSE ZUM VULKANISIEREN EINES FAHRZEUGREIFENS**

(30) Priorität: 17.06.2022 DE 102022206103
(71) Anmelder: Continental Reifen Deutschland GmbH, 30165 Hannover (DE)
(72) Erfinder: Fricke, Bernd, 30165 Hannover (DE); Ramm, Michael, 30165 Hannover (DE); Dr. Wedekind, Horst, 30165 Hannover (DE)
(74) Vertreter: Continental Corporation

(57) **Zusammenfassung**

Die Erfindung betrifft eine Heizpresse (1) zum Vulkanisieren eines Fahrzeugreifens mit einem Heizpressen-Oberteil (9) und einem Heizpressen-Unterteil (4), wobei an dem Heizpressen-Oberteil (9) ein die Formteile (13, 20) einer Vulkanisierform aufweisender Container (18) angeordnet ist, wobei das Heizpressen-Oberteil (9) in axialer Richtung (19) auf das Heizpressen-Unterteil (4) verfahrbar ist, wobei das Heizpressen-Oberteil (9), der Container (18) und das Heizpressen-Unterteil (4) derart in Verbindung stehen, dass beim Herunterfahren des Heizpressen-Oberteils (9) über einen in axialer Richtung (19) erfolgenden Gesamthub, Profilsegmente (20) der Vulkanisierform in radialer Richtung schließbar sind.

## Beschreibung

Die Erfindung betrifft eine Heizpresse zum Vulkanisieren eines Fahrzeugreifens mit einem Heizpressen-Oberteil und einem Heizpressen-Unterteil, wobei an dem Heizpressen-Oberteil ein die Formteile einer Vulkanisierform aufweisender Container angeordnet ist, wobei das Heizpressen-Oberteil in axialer Richtung auf das Heizpressen-Unterteil verfahrbar ist.

Weiterhin betrifft die Erfindung ein Verfahren zur Vulkanisation eines Fahrzeugreifens in einer derartigen Heizpresse sowie die Verwendung einer derartigen Heizpresse.

Heizpresse zum Vulkanisieren eines Fahrzeugreifens mit einem Heizpressen-Oberteil und einem Heizpressen-Unterteil sind bekannt. Heizpressen erzeugen beim Vulkanisieren mittels Profilsegmenten von außen auf den Reifenrohling einen hohen Druck. Einer unerwünschten Verformung des Reifenrohlings wird hierbei entgegengewirkt, indem in dem Reifenrohling ein Balg positioniert wird und mit hohem Druck beaufschlagt wird. Um einen Wärmeeintrag von der Innenseite des Reifens zu erzeugen, wird als Medium zum Druck erzeugen Wasserdampf verwendet.

Bälge unterliegen einem Verschleiß und verursachen durch ihre Beschaffung und ihren Wechsel in der Heizpresse Kosten und Stillstandzeiten der Heizpresse. Weiterhin führt die Verwendung von beschädigten Bälgen oder ein Rutschen des Balges beim Vulkanisieren zum Ausschuss von Reifen.

Der Erfindung liegt die Aufgabe zugrunde, eine Heizpresse sowie ein Verfahren zum Vulkanisieren eines Fahrzeugreifens bereitzustellen, die die oben genannten Nachteile überwindet und eine kosteneffizientere Vulkanisation von Fahrzeugreifen ermöglicht, indem Ausschuss von Reifen durch defekte Bälge entfällt und die Kosten für die Beschaffung und den Wechsel der Bälge in den Heizpressen sowie dadurch entstehende Stillstandzeiten verringert.

Diese Aufgabe wird gelöst mit einer Heizpresse mit den Merkmalen des Patentanspruches 1 sowie einem Verfahren und einer Verwendung gemäß den nebengeordneten Ansprüchen. Die Unteransprüche betreffen besonders zweckmäßige Weiterbildungen der Erfindung.

Erfindungsgemäß ist also eine Heizpresse zum Vulkanisieren eines Fahrzeugreifens mit einem Heizpressen-Oberteil und einem Heizpressen-Unterteil vorgesehen, wobei an dem Heizpressen-Oberteil ein die Formteile einer Vulkanisierform aufweisender Container angeordnet ist, wobei das Heizpressen-Oberteil in axialer Richtung auf das Heizpressen-Unterteil verfahrbar ist. Das Heizpressen-Oberteil, der Container und das Heizpressen-Unterteil stehen derart mechanisch in Verbindung, dass beim Herunterfahren des Heizpressen-Oberteils über einen in axialer Richtung erfolgenden Gesamthub, Profilsegmente der Vulkanisierform in radialer Richtung schließbar sind. Der Gesamthub ist der vorgesehene Verfahrweg des Heizpressen-Oberteils und kann in zwei Teilhüben, einem ersten Hub und einem zweiten Hub abgefahren werden.

Das Heizpressen-Unterteil weist einen unteren Wulstring und das Heizpressen-Oberteil einen oberen Wulstring auf, wobei die beiden Wulstringe mit jeweils einer Dichtplatten eine Geometrie zum Ausbilden einer gasdichten Abdichtung mit einem Wulst eines Reifenrohlings aufweisen, zum Abdichten des Reifenrohlings zur Umgebung.

Das Heizpressen-Unterteil weist weiterhin einen Mittenmechanismus mit Gasauslassöffnungen zum unmittelbaren Befüllen eines Reifenrohlings mit einem Heizmedium auf. Unter unmittelbarem Befüllen wird das in Kontakt treten des Heizmediums mit dem Reifenrohling verstanden.

Das Abdichten des Reifenrohlings zur Umgebung durch die Wulstringe und die Dichtplatten ermöglicht den Entfall von Bälgen, um die Reifenrohlinge mittelbar mit einem Heizmedium zu befüllen. Zum Einbringen des Heizmediums in den Reifenrohling weist der Mittenmechanismus Gasauslassöffnungen auf.

Eine vorteilhafte Weiterbildung sieht vor, dass der obere Wulstring unabhängig von dem Heizpressen-Oberteil verfahrbar ist. Hierdurch wird in einfacher Form ermöglicht, dass der Wulstring mit der Dichtplatte die obere Reifenöffnung abdichtet während die Profilsegmente oberhalb des Reifenrohlings angeordnet sind. Eine Kollision des Reifenrohlings mit den Profilsegmenten wird vermieden.

Eine vorteilhafte Weiterbildung sieht vor, dass der obere Wulstring mit einem ersten Aktuator verfahrbar ist und eine Druckplatte mit einem zweiten Aktuator verfahrbar ist. Hierdurch kann der Reifenrohling erst abgedichtet und bombiert werden, bevor die Druckplatte in Kontakt mit dem Reifenrohling tritt und ein Abdichten des Reifenrohlings durch dessen Deformation erschwert.

Eine vorteilhafte Weiterbildung sieht vor, dass der erste Aktuator und beziehungsweise oder der zweite Aktuator ein hydraulischer, pneumatischer oder elektrischer Aktuator ist. Eine einfache Realisierung eines Aktuators, der die notwendigen Kräfte erzeugen wird mit diesen Aktuatoren ermöglicht.

Eine vorteilhafte Weiterbildung sieht vor, dass ein erster hydraulischer Aktuator und ein zweiter hydraulischer Aktuator koaxial angeordnet sind, wobei bevorzugt die Druckplatte durch einen Kreisringzylinder verfahrbar ist. Hierdurch wird in einfacher Form eine koaxiale Anordnung der Aktuatoren erreicht, so dass die Kräfte zum Andrücken der Druckplatte und des Wulstrings koaxial von einer Seite des Reifens aufgebracht werden können.

Eine vorteilhafte Weiterbildung sieht vor, dass das Heizpressen-Unterteil einen Mittenmechanismus aufweist, der den unteren Wulstring verfährt. Durch das Verfahren des unteren Wulstrings wird ein Ablösen des Reifens von der unteren Seitenwandschale nach dem Vulkanisationsprozess ermöglicht, was eine einfachere und schnellere Entnahme des Reifens aus der Heizpresse ermöglicht.

Eine vorteilhafte Weiterbildung sieht vor, dass das Heizmedium ein trockenes Heizmedium, insbesondere ein Gas ist. Durch die Verwendung eines trockenen Heizmediums kann das Entfernen des Kondensats nach dem Vulkanisieren entfallen. Das Heizmedium kann zum überwiegenden Teil wiederholt verwendet werden, da es nicht als Kondensat verloren geht.

Eine vorteilhafte Weiterbildung sieht vor, dass das Heizmedium in dem Reifenrohling durch einen Kreislauf zierkulierbar oder stagnierbar ist. Ein Zirkulieren des Heizmediums durch den Reifenrohling ermöglicht einen über die Zeit und die mit Heizmedium beaufschlagte Oberfläche des Reifenrohlings gleichmäßigeren Wärmeübertag in den Reifenrohling. Ein Stagnieren des Heizmediums erlaubt hingegen eine besonders kosteneffiziente Heizpresse zu erzeugen und ein besonders einfaches Verfahren zu realisieren.

Erfindungsgemäß ist ein Verfahren zur Vulkanisation eines Fahrzeugreifens in einer erfindungsgemäßen Heizpresse, das die folgenden Schritte ausführt, vorgesehen:
a) Beladen der geöffneten Heizpresse durch Einlegen des zu vulkanisierenden Rohreifens auf den unteren Wulstring
b) Verfahren des Containers von einer oberen Position um einen ersten Hub in axialer Richtung in Richtung des Heizpressen-Unterteils
c) in Kontakt bringen des oberen Wulstrings mit dem Wulst des Rohreifens
d) bombieren des Rohreifens mit einem Heizmedium, wobei das Heizmedium aus den Gasauslassöffnungen des Mittenmechanismuses austritt
e) Verfahren des Containers um einen zweiten Hub in axialer Richtung in Richtung des Heizpressen-Unterteils in eine untere Position, wobei die Formteile der Vulkanisierform in radialer Richtung zusammengefahren werden
f) Vulkanisation des Reifenrohlings
g) Öffnen der Heizpresse und Entladen des fertig vulkanisierten Reifens.

Das dichtende in Kontakt treten der Wulste des Reifen mit den Wulstringen ermöglicht den Entfall von Bälgen.

Eine vorteilhafte Weiterbildung sieht vor, dass im Schritt d) eine Abdichtung des Reifenrohlings zur Umgebung erzeugt wird. Das Erzeugen einer dichten Verbindung der Reifenwülste zu den Wulstringen ist durch das Bombieren des Reifens in besonders einfacher weise realisierbar.

Eine vorteilhafte Weiterbildung sieht vor, dass beim Schritt c) der obere Wulstring unabhängig von dem Container Verfahren wird. Hierdurch wird in einfacher Form ermöglicht, dass der Wulstring mit der Dichtplatte die obere Reifenöffnung abdichtet bevor die Profilsegmente zum Reifenrohling verfahren. Eine Kollision des Reifenrohlings mit den Profilsegmenten wird vermieden.

Eine vorteilhafte Weiterbildung sieht vor, dass während des Schritts f) das Heizmedium im Reifenrohling gefördert wird, bevorzugt durch Erzeugen eines Kreislaufs oder das das Heizmedium im Reifenrohling stagniert. Das Erzeugen eines Kreislaufs des Heizmediums ermöglicht einen über die Zeit und die mit Heizmedium beaufschlagte Oberfläche des Reifenrohlings gleichmäßigeren Wärmeübertag in den Reifenrohling. Ein Stagnieren des Heizmediums erlaubt hingegen ein besonders einfaches Verfahren zu realisieren.

Es ist eine Verwendung einer erfindungsgemäßen Heizpresse zum Vulkanisieren eines Fahrzeugreifens, insbesondere zur Durchführung eines erfindungsgemäßen Verfahrens vorgesehen.

Die Erfindung lässt zahlreiche Ausführungsformen zu. Zur weiteren Verdeutlichung ihres Grundprinzips ist eine davon in den Zeichnungen dargestellt und wird nachfolgend beschrieben. Diese zeigen in
Fig. 1 eine erfindungsgemäße Heizpresse im geöffneten Zustand;
Fig. 2 die Heizpresse der Fig. 1 mit ausgefahrenen Formteilen;
Fig. 3 die Heizpresse der Fig. 1 mit aufgesetzten Formteilen;
Fig. 4 die Heizpresse der Fig. 1 während des Vulkanisierens.

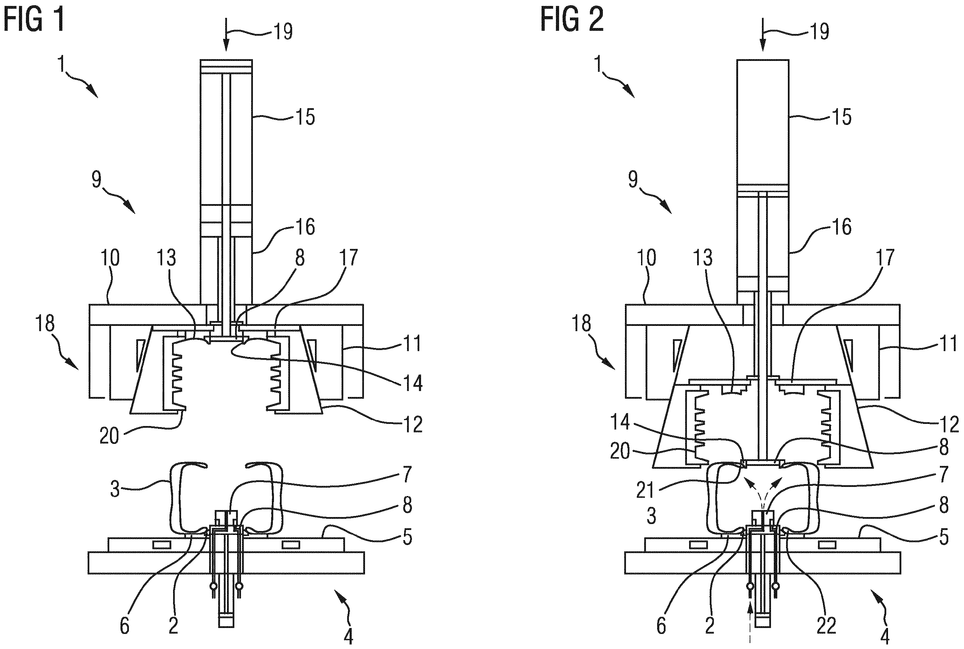

Figur 1 zeigt eine erfindungsgemäße Heizpresse 1 zum Vulkanisieren eines Fahrzeugreifens mit einem auf dem unteren Wulstring 2 abgesetzten Reifenrohling 3 im geöffneten Zustand.

Die Heizpresse 1 weist ein Heizpressen-Unterteil 4 mit einer unteren Heizplatte 5 auf. Auf der unteren Heizplatte 5 ist eine untere Seitenwandschale 6 zum Ausbilden einer Fahrzeugreifengeometrie angeordnet. Durch die untere Heizplatte 5 ragt koaxial zum Wulstring 2 ein Mittenmechanismus 7, der dichtend mit einer Dichtplatte 8 verbunden ist, in den Reifenrohling 3 hinein. Der Mittenmechanismus 7 weist in seinem oberen Bereich Düsen zum in direkten Kontakt bringen des Reifenrohlings 3 mit einem Heizmedium auf. Der Mittenmechanismus 7 ist unterhalb der unteren Heizplatte 5 mit einer Heizmediumquelle verbunden. Die Dichtplatte 8 ist umfangsseitig mit dem unteren Wulstring 2 dichtend verbunden, so dass nach dem Bombieren des Reifenrohlings 3 der Reifenrohling 3 mit dem unteren Wulstring 2, der Dichtplatte 8 und dem Mittenmechanismus 7 die unten angeordnete Öffnung des Reifenrohlings 3 dicht verschließt.

Die Heizpresse 1 weist weiterhin ein Heizpressen-Oberteil 9 mit einer oberen Heizplatte 10 sowie einen unterhalb der oberen Heizplatte 10 angeordneten beheizten Schließring 11 auf. Der Schließring 11 weist eine abgeschrägte Innenfläche auf, an der der Segmentring 12 axial sowie radial verfahrbar gelagert ist.

Koaxial zum Segmentring 12 ist eine obere Seitenwandschale 13 angeordnet, die den oberen Wulstring 14 aufnimmt. Der Innenumfang des oberen Wulstrings 14 ist dichtend mit einer Dichtplatte 8 verbunden. Nach dem Bombieren des Reifenrohlings 3 dichtet der obere Wulstring 14 mit der Dichtplatte 8 die oben angeordnete Öffnung des Reifenrohlings 3 ab.

Das Heizpressen-Oberteil 9 weist einen ersten Aktuator 15, der als ein Zylinder ausgebildet ist, sowie einen zweiten Aktuator 16, der als ein Kreisringzylinder ausgebildet ist, auf, die koaxiale zueinander sowie zu den Wulstringen 2, 14 angeordneten sind.

Der Kreisringzylinder steht in Verbindung mit einer Druckplatte 17 und verfährt diese axial. Der Zylinder ist mit einer Dichtplatte 8 verbunden und mittels dieser mit dem oberen Wulstring 14 und verfährt diesen axial. Beide Zylinder befinden sich in ihrer oberen Position, so dass sich die Druckplatte 17 an der oberen Heizplatte 10 und der obere Wulstring 14 an der oberen Seitenwandschale 13 befindet. Das Heizpressen-Oberteil 9 ist nicht dargestellt verfahrbar gelagert.

Werden beide Zylinder um einen ersten Hub zum Heizpressen-Unterteil 4 verfahren, verfährt der Segmentring 12, der in einem Container 18 gelagert ist, in axialer Richtung 19 nach unten sowie in radialer Richtung nach außen. Die Profilsegmente 20 die den Segmentring 12 ausbilden fahren hierdurch auseinander. Der obere Wulstring 14 steht weiterhin in Kontakt mit der oberen Seitenwandschale 13.

In Figur 2 ist die Heizpresse der Figur 1 dargestellt, wobei beide Zylinder um ihren gesamten Verfahrweg, dem Gesamthub zum Heizpressen-Unterteil 4 verfahren sind. Der Wulstring 14 steht in Kontakt mit dem oberen Wulst 21 des Reifenrohlings 3 und wird durch Bombieren des Reifenrohlings 3 gegen diesen abgedichtet. Das Bombieren dichtet in gleicher Weise den unteren Wulst 22 des Reifenrohlings 3 ab.

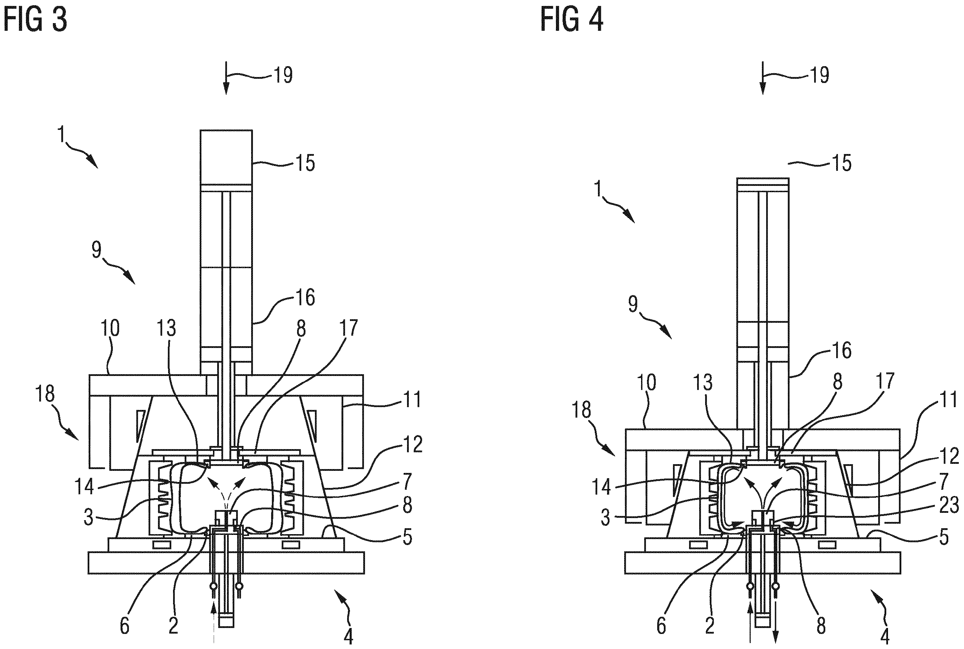

In Figur 3 ist die Heizpresse der Figur 1 dargestellt, wobei der Zylinder von seiner oberen Position nur noch um einen ersten Hub in Richtung zum Heizpressen-Unterteil 4 verfahren ist. Der Zylinder ist von der in Figur 2 dargestellten Position um einen zweiten Hub nach oben verfahren. Das Heizpressen-Oberteil 9 ist um einen ersten Hub zum Heizpressen-Unterteil 4 verfahren.

Der Segmentring 12 steht in Kontakt zur unteren Heizplatte 5 und ist radial vom Reifenrohling 3 beabstandet. Um den Segmentring 12 beziehungsweise die Profilsegmente 20 mit dem Reifenrohling 3 in Kontakt zu bringen wird das Heizpressen-Oberteil 9 um einen zweiten Hub in eine untere Position verfahren, wobei die Zylinder in ihre obere Position verfahren.

Dieser Zustand der Heizpresse 1 ist in Figur 4 dargestellt, die die Heizpresse 1 der Figur 1 darstellt. Sind der Heizpressen-Oberteil 9 sowie die Zylinder verfahren, wird der Druck des Heizmediums, das durch den Mittenmechanismus 7 austritt, auf 22 bar erhöht. Als Heizmedium wird vorliegend Stickstoff verwendet, das auf eine Temperatur von 200 °C erwärmt wird, bevor es in den Reifenrohling 3 strömt. Ein effektiver Wärmeübertrag und das Halten einer Gastemperatur von 200 °C wird durch eine Zirkulation des Gases durch den Reifenrohling erreicht. Hierzu weist der Mittenmechanismus 7 Gasauslassöffnungen 23 auf, um das Gas beim geforderten Überdruck ausströmen zu lassen. Nach 15 Minuten ist das Vulkanisieren abgeschlossen. Der Druck im Reifen wird abgelassen, das Heizpressen-Oberteil 9 wird nach oben in die in Figur 1 dargestellte Position verfahren, der Reifen wird der Heizpresse 1 entnommen und ein weiterer Reifenrohling 3 wird in der Heizpresse 1 positioniert.

### Bezugszeichenliste

- 1: Heizpresse
- 2: unterer Wulstring
- 3: Reifenrohling
- 4: Heizpressen-Unterteil
- 5: untere Heizplatte

- 6: untere Seitenwandschale
- 7: Mittenmechanismus
- 8: Dichtplatte
- 9: Heizpressen-Oberteil
- 10: obere Heizplatte

- 11: Schließring
- 12: Segmentring
- 13: obere Seitenwandschale
- 14: obere Wulstring
- 15: erste Aktuator

- 16: zweite Aktuator
- 17: Druckplatte
- 18: Container
- 19: axiale Richtung
- 20: Profilsegment

- 21: oberer Wulst
- 22: unterer Wulst
- 23: Gasauslassöffnung

## Patentansprüche

1. Heizpresse (1) zum Vulkanisieren eines Fahrzeugreifens
- mit einem Heizpressen-Oberteil (9) und einem Heizpressen-Unterteil (4), wobei an dem Heizpressen-Oberteil (9) ein die Formteile (13, 20) einer Vulkanisierform aufweisender Container (18) angeordnet ist, wobei das Heizpressen-Oberteil (9) in axialer Richtung (19) auf das Heizpressen-Unterteil (4) verfahrbar ist,
- wobei das Heizpressen-Oberteil (9), der Container (18) und das Heizpressen-Unterteil (4) derart in Verbindung stehen, dass beim Herunterfahren des Heizpressen-Oberteils (9) über einen in axialer Richtung (19) erfolgenden Gesamthub, Profilsegmente (20) der Vulkanisierform in radialer Richtung schließbar sind,
- wobei das Heizpressen-Unterteil (4) einen unteren Wulstring (22) und das Heizpressen-Oberteil (9) einen oberen Wulstring (21) aufweisen,
- wobei die Wulstringe (21, 22) mit Dichtplatten (8) eine Geometrie zum Ausbilden einer gasdichten Abdichtung mit einem Wulst eines Reifenrohlings aufweisen, zum Abdichten des Reifenrohlings zur Umgebung,
- wobei das Heizpressen-Unterteil (4) einen Mittenmechanismus (7) mit Gasauslassöffnungen (23) zum unmittelbaren Befüllen eines Reifenrohlings mit einem Heizmedium aufweist.

2. Heizpresse (1) nach Anspruch 1, **dadurch gekennzeichnet, dass** der obere Wulstring (14) unabhängig von dem Heizpressen-Oberteil (9) verfahrbar ist.

3. Heizpresse (1) nach den Ansprüchen 1 oder 2, **dadurch gekennzeichnet, dass** der obere Wulstring (14) mit einem ersten Aktuator (15) verfahrbar ist und eine Druckplatte (17) mit einem zweiten Aktuator (16) verfahrbar ist.

4. Heizpresse (1) nach einem der vorangehenden Ansprüche, **dadurch gekennzeichnet, dass** der erste Aktuator (15) und/oder der zweite Aktuator (16) ein hydraulischer, pneumatischer oder elektrischer Aktuator ist.

5. Heizpresse (1) nach einem der vorangehenden Ansprüche, **dadurch gekennzeichnet, dass** ein erster Aktuator (15) und ein zweiter Aktuator (16) koaxial angeordnet und hydraulisch angetrieben sind, wobei bevorzugt die Druckplatte (17) durch einen Kreisringzylinder verfahrbar ist.

6. Heizpresse (1) nach einem der vorangehenden Ansprüche, **dadurch gekennzeichnet, dass** das Heizpressen-Unterteil (4) einen Mittenmechanismus (7) aufweist, der den unteren Wulstring (2) verfährt.

7. Heizpresse (1) nach einem der vorangehenden Ansprüche, **dadurch gekennzeichnet, dass** das Heizmedium ein trockenes Heizmedium, insbesondere ein Gas ist.

8. Heizpresse (1) nach einem der vorangehenden Ansprüche, **dadurch gekennzeichnet, dass** das Heizmedium in dem Reifenrohling durch einen Kreislauf zierkulierbar oder stagnierbar ist.

9. Verfahren zur Vulkanisation eines Fahrzeugreifens in einer Heizpresse (1), insbesondere nach einem der vorangehenden Ansprüche, **dadurch gekennzeichnet, dass** folgende Schritte ausgeführt werden:
a) Beladen der geöffneten Heizpresse (1) durch Einlegen des zu vulkanisierenden Rohreifens auf den unteren Wulstring (2)
b) Verfahren des Containers (18) um einen ersten Hub in axialer Richtung (19) in Richtung des Heizpressen-Unterteils (4)
c) in Kontakt bringen des oberen Wulstrings (14) mit dem Wulst des Rohreifens
d) bombieren des Rohreifens mit einem Heizmedium
e) Verfahren des Containers (18) um einen zweiten Hub in axialer Richtung (19) in Richtung des Heizpressen-Unterteils (4), wobei Profilsegmente (20) der Vulkanisierform in radialer Richtung zusammengefahren werden
f) Vulkanisation des Reifenrohlings
g) Öffnen der Heizpresse (1) und Entladen des fertig vulkanisierten Reifens.

10. Verfahren nach Anspruch 9, **dadurch gekennzeichnet, dass** im Schritt d) eine Abdichtung des Reifenrohlings zur Umgebung erzeugt wird.

11. Verfahren nach einem der Ansprüche 9 oder 10, **dadurch gekennzeichnet, dass** beim Schritt c) der obere Wulstring (14) unabhängig von dem Container (18) Verfahren wird.

12. Verfahren nach einem der Ansprüche 9 bis 11, **dadurch gekennzeichnet, dass** während des Schritts f) das Heizmedium im Reifenrohling gefördert wird, insbesondere durch Erzeugen eines Kreislaufs oder das das Heizmedium im Reifenrohling stagniert.

13. Verwendung einer Heizpresse (1) nach einem der Ansprüche 1 bis 8 zum Vulkanisieren eines Fahrzeugreifens, insbesondere zur Durchführung eines Verfahrens nach einem der Ansprüche 9 bis 12.
